Europäisches Patentamt

European Patent Office

Office européen des brevets

(11) Publication number: **0 286 728**
**A1**

## EUROPEAN PATENT APPLICATION

(21) Application number: **87117789.5**

(51) Int. Cl.4: **A01K 27/00**

(22) Date of filing: **02.12.87**

(30) Priority: **10.04.87 JP 53383/87 U**

(43) Date of publication of application:
**19.10.88 Bulletin 88/42**

(84) Designated Contracting States:
**DE FR GB**

(71) Applicant: **Kabushikigaisha Animal Health Food**
**77-7, Ooyaguchikamicho Itabashi-ku Tokyo(JP)**

(72) Inventor: **Arakawa, Makoto c/o Kabushikigaisha**
**Animal Health Food 77-7, Ooyaguchikamicho Itabashi-ku Tokyo(JP)**

(74) Representative: **Schickedanz, Willi, Dipl.-Ing.**
**Langener Strasse 68**
**D-6050 Offenbach/Main(DE)**

(54) Collar for a pet.

(57) An ornamental band (1) for a pet which includes a core portion (4) made of a synthetic resin containing chemicals and a porous coating (2) adapted for flexibly enclosing the core portion (4). The ornamental band (1) can readily emit the chemicals contained in the core portion for a prolonged period of time, thus assuring a significant environmentally sanitary effect on a pet, and further allowing for improved soft contact with the pet.

# FIG. 1

## COLLAR FOR A PET

### Technical Field to which the Invention relates

The present invention relates to a band such as a collar or a bellyband to be worn by a pet such as a dog or a cat.

### Description of the Prior Art

Conventionally, a drag band for taking a pet for a walk or a collar has been made of leather, braid or the like.

Such a drag band is, however, designed only for the purpose of taking a pet for a walk or simply as an ornament, and no consideration from an environmental standpoint such as aesthetic and sanitary considerations for the pet has been taken into account.

### Technical Problem

It is an object of the present invention to provide a band which can achieve its inherent purpose as a drag band or an ornament and, at the same time, has an environmentally sanitary effect such as a fragrance, deodorization, or extermination of fleas.

### Solution of the Technical Problem

According to the present invention, there is provided, for achieving the above object, a band comprising a core portion which is capable of containing certain chemicals therein and a porous coating adapted for enclosing the core portion.

### Advantageous Effects of the Invention

The band of the present invention, in which the core portion of synthetic containing chemicals is enclosed in the porous coating, can readily emit the chemicals contained in the synthetic resin for a relatively long period of time, assuring a significant environmentally sanitary effect on the pet, and further, provides an improved soft contact with the pet.

### Brief Description of the Drawings

Various other objects, features and attendant advantages of the present invention will be more fully appreciated as the same becomes better understood from the following detailed description when considered in connection with the accompanying drawings in which like reference characters designate like or corresponding parts throughout the several views and wherein:

Fig. 1 is a perspective view, partially in section, of a collar of a first embodiment according to the present invention;

Fig. 2 is a cross-sectional view taken along II-II in Fig. 1;

Fig. 3 is a plan view of a collar of a second embodiment according to the present invention;

Fig. 4 is a side elevational view, partially in section, of Fig. 3;

Fig. 5 is a plan view of a bellyband according to the present invention; and

Fig. 6 is a side elevational view, partially in section, of Fig. 5.

### Description of the preferred Embodiment

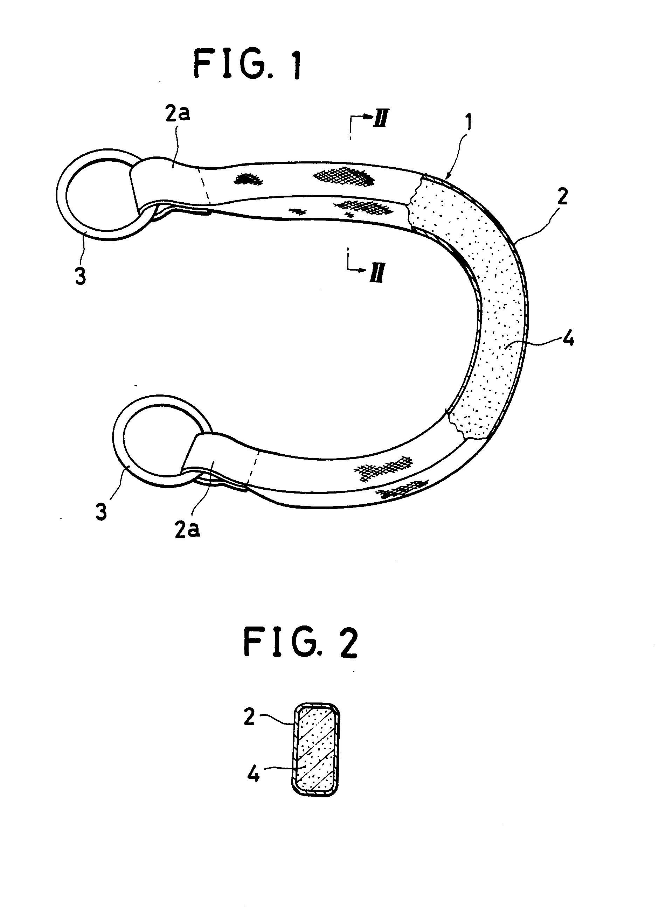

A first embodiment of the present invention will now be described with reference to Figures 1 and 2. Numeral 1 designates a long collar including a porous coating 2 in the form of a tubular band by knitting a braid of fiber or yarn of cotton, silk, hemp, rayon staple, rayon, polyamide, polyester, polypropylene, polyacrylonitrile, vinylon or the like. The coating 2 has opposite ends 2a thereof folded back and fitting rings 3 are attached to the respective ends 2a. A core portion 4 made of a synthetic resin is disposed within the coating 2. The core portion 4 can be formed of a flexible synthetic resin, such as polyethylene, polypropylene, polyvinyl chloride, polyester or polyamide, mixed during preparation with a perfume agent such as jasmine, lavender, strawberry or rose, a deodorant such as activated carbon, or an agent for avoiding insects, such as medicine containing tetrachlorvinphos for getting rid of fleas, medicine containing dimpylate for getting rid of fleas and ticks, or medicine containing 0,0-dimethyl 0-(2,2-dichlorovinyl) phosphate for getting rid of fleas and lice, pyrethrum or mothnon.

When the collar 1 is put on the neck of a pet, the temperature of the pet, the outside air temperature and similar environmental parameters cause the core portion 4 made of the synthetic resin containing, for example, a perfume agent for emitting a fragrance through the porous coating 2. In the situation where the core portion 4 contains a deodorant such as activated carbon, pet odor can be removed. Where the core portion contains an agent for avoiding insects as medicine containing tetrachlorovinphos, parasites such as fleas and ticks are exterminated.

Insofar as chemicals such as a perfume agent, deodorant or agent for avoiding insects are contained in the synthetic resin, the effect of the chemicals can be prolonged. Furthermore, since the core portion 4 of the synthetic resin is flexibly enclosed by the porous coating 2 formed of a braid of polyamide or the like, the collar 1 will softly contact with the neck of the pet.

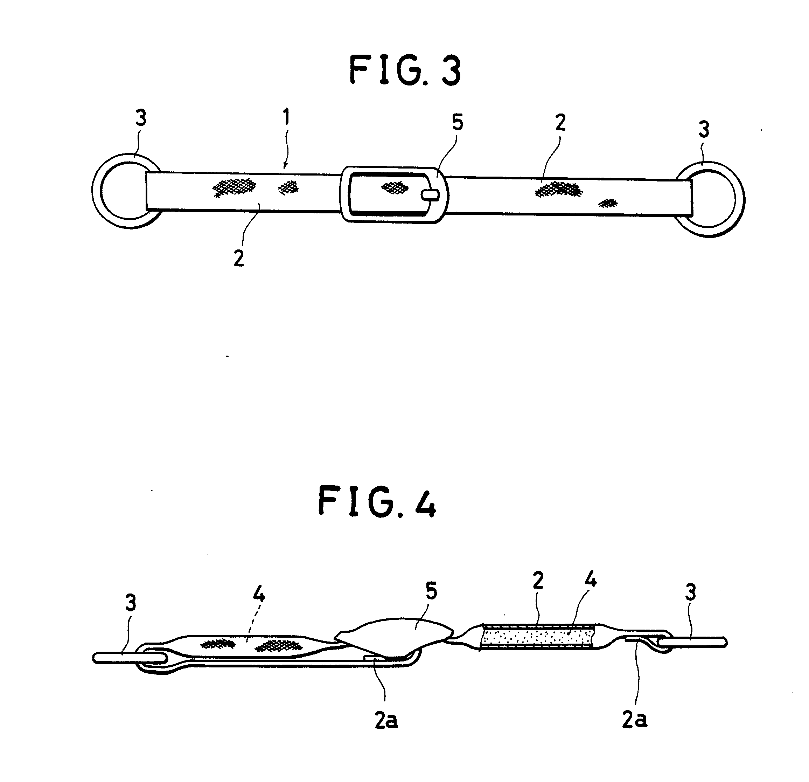

Figures 3 and 4 show a second embodiment of the present invention, in which the collar 1 includes the core portion 4 made of the above-mentioned synthetic resin and disposed separately in portions of the porous coating 2. The collar 1 is provided with a clamping ring or buckle 5 to make the collar adjustable.

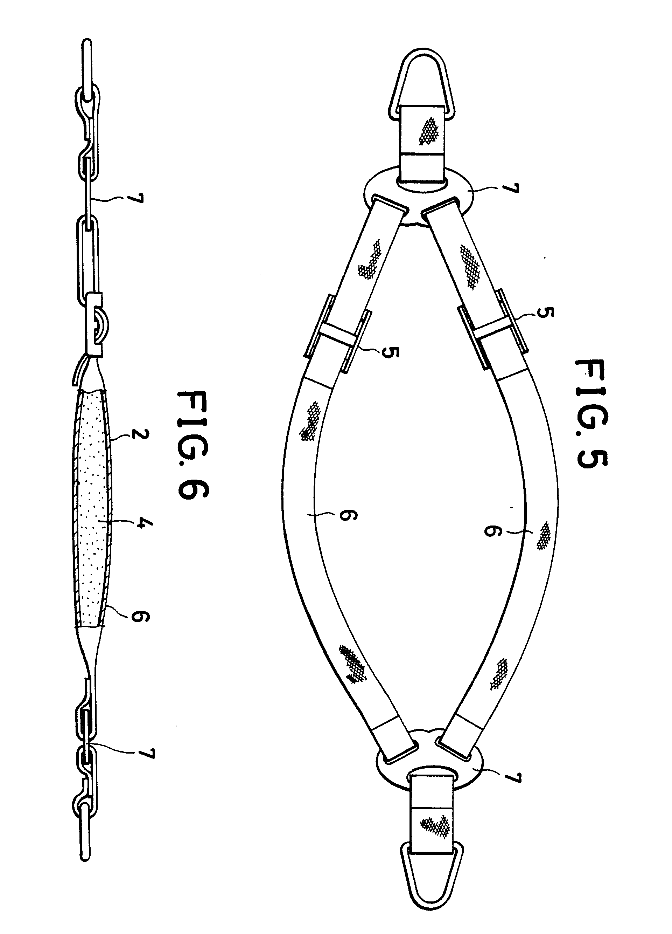

Figures 5 and 6 show a bellyband for a pet according to the present invention. The bellyband includes band members 6 each composed of the porous coating 2 in which the core portion 4 made of the above-mentioned synthetic resin is flexibly enclosed. The bellyband is provided with clamping rings or buckles 5 for expansion and also has connectors 7.

The porous coating 2 can be provided with a zip-fastener or the like for exchanging the core portion 4 contained in the porous coating 2. Also, the porous coating 2 can be made of a material which is used in modern rain coats and sports underwear and which allows moisture to penetrate in one direction only. By using such material, rain is prohibited from penetrating into the core portion 4.

While the invention has been described with reference to the preferred embodiment thereof, it is to be understood that modifications or various may be easily made without departing from the scope of the present invention which is defined by the appended claims.

## Claims

1. A band for a pet, **characterized by** a core portion (4) which is capable of containing predetermined chemicals therein and a porous coating (2) adapted for enclosing said core portion (4).

2. A band according to claim 1, **characterized in that** the core portion (4) is made of synthetic resin.

3. A band according to claim 1, **characterized in that** the porous coating (2) flexibly encloses said core portion (4).

4. A band according to claim 1, **characterized in that** said porous coating (2) comprises a knitted braid of fiber or yarn selected from the group consisting of cotton, silk, hemp, rayon staple, rayon, polyamide, polyester, polypropylene, polyacrylonitrile, or vinylon.

5. A band according to claim 1, **characterized in that** said synthetic resin comprises a flexible material selected from the group consisting of polyethylene, polyvinyl chloride, polyester or polyamide.

6. A band according to claim 1, **characterized in that** said chemicals are selected from the group consisting of a perfume agent, a deodorant or an agent for avoiding insects.

7. A band according to claim 6, **characterized in that** said perfume agent is selected from the group consisting of jasmine, lavender, strawberry, rose or the like.

8. A band according to claim 6, **characterized in that** said deodorant comprises activated carbon.

9. A band according to claim 6, **characterized in that** said agent for avoiding insects is selected from a group consisting of a medicine containing tetrachlorvinphos for getting rid of fleas, a medicine containing dimpylate for getting rid of fleas and ticks, a medicine containing 0,0-dimethyl 0-(2,2-dichlorovinyl) phosphate for getting rid of fleas and lice, pyrethrum, or mothnon.

10. A band according to claim 1, **characterized in that** the coating (2) comprises a zip-fastener or the like for taking away a used core portion (4) and replace it by a fresh core portion, and that the coating (2) further consists of a material allowing moisture to get from the core portion (4) to the pet area and prohibiting moisture from getting from the pet area to the core portion (4).

# FIG. 1

# FIG. 2

# FIG. 3

# FIG. 4

# FIG. 5

# FIG. 6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| X | FR-A-2 400 839 (D.M.L. MAILLE) <br> * complete document * <br> --- | 1-3,5,6 | A 01 K 27/00 |
| Y | EP-A-0 124 404 (M.A. ROMBI) <br> * complete document * | 1-6 | |
| A | <br> --- | 9 | |
| Y | GB-A-2 050 834 (ASHE LABORATORIES LTD.) <br> * complete document * <br> --- | 1-6 | |
| A | US-A-4 350 122 (T.K. SHOTWELL) <br> * column 5, lines 1-21; figures * <br> ----- | 10 | |

TECHNICAL FIELDS SEARCHED (Int. Cl.4)

A 01 K 27/00

The present search report has been drawn up for all claims

| Place of search | Date of completion of the search | Examiner |
|---|---|---|
| BERLIN | 06-07-1988 | WUNDERLICH J E |

EPO FORM 1503 03.82 (P0401)